Europäisches Patentamt

(19) European Patent Office

Office européen des brevets

(11) Publication number: **0 357 152 B1**

(12) **EUROPEAN PATENT SPECIFICATION**

(45) Date of publication of patent specification:
06.11.91 Bulletin 91/45

(51) Int. Cl.⁵: **A01M 7/00, A01D 46/24**

(21) Application number: 89202215.3

(22) Date of filing: 31.08.89

(54) Mobile device for treating plants such as crops and fruit trees.

(30) Priority: 01.09.88 NL 8802163

(43) Date of publication of application:
07.03.90 Bulletin 90/10

(45) Publication of the grant of the patent:
06.11.91 Bulletin 91/45

(84) Designated Contracting States:
AT BE CH DE ES FR GB GR IT LI LU NL SE

(56) References cited:
DE-A- 3 112 068
FR-A- 2 420 294
FR-A- 2 423 122
FR-A- 2 562 378
FR-A- 2 606 176
GB-A- 2 142 447
US-A- 3 825 087

(73) Proprietor: INSTITUUT VOOR MECHANISATIE
ARBEID EN GEBOUWEN
Mansholtlaan 10-12
NL-6708 PA Wageningen (NL)

(72) Inventor: Van de Werken, Johannes
Gruttoweide 76
NL-6708 BK Wageningen (NL)

(74) Representative: de Bruijn, Leendert C. et al
Nederlandsch Octrooibureau
Scheveningseweg 82 P.O. Box 29720
NL-2502 LS 's-Gravenhage (NL)

## Description

The invention relates to a mobile device for treating plants in rows such as crops and fruit trees in the field, for example for spraying or picking fruit, comprising a carrier device for the treatment means, with wheels at the bottom so that said mobile device can run along a row of plants, and swivelling means for at least one wheel, operated by a feeler which detects the position of a row of plants, such as the trunks of trees or shrubs, and which can swivel said wheel through a slight angle in such a way that said mobile device maintains the correct distance from said row of plants during travelling.

Such a device is known from DE-A-3112068, page 8, last paragraph, and Fig. 4. Therein, a feeler senses the rows of plants and swivels a wheel of the device, and no more details are given thereof. In particular it is not clear how the feeler can both avoid the device from moving away from the row of plants and from moving too closely towards said row.

The invention aims at improving such devices so that they are guided more accurately over the plants. This is particularly a problem for high plants, such as shrubs or trees, which have to be treated, e.g. sprayed, by a device which has little freedom of sideways movements, perpendicular to the direction of travel of the device, e.g. in that already small sideways movements will easily give damage to the device or the plants and/or that an eccentric position of the device over and with respect to the plants will give a considerable difference in effect or efficiency of the treatment, e.g. the spraying, on the plants, e.g. in that the spraying elements on one side will be too far from the plants and at the other side will be too close to them.

In such cases, where there is not much freedom for sideways movements of the device a manual steering is very difficult to perform by the operator and the device cannot move over the plants automatically.

The invention aims at solving such problems and to this end a device according to the invention is characterized in that the feeler comprises a setting facility for said wheel holding it, in a position in which the feeler does not detect a plant, directed in such a way that the mobile device travels at a small angle with respect to the row of plants and moves the feeler towards the row of plants. Preferred features of the invention are set out in the dependent claims.

The system according to the invention makes it possible to apply one feeler for keeping the device accurately in line with the row notwithstanding the fact that the plants, e.g. the trunks of fruit trees, are positioned at mutual distances in the row, so that it is difficult to maintain the correct direction of movement of the device if it has its own drive and is not pulled in the correct direction by a winch at the end, e.g. on a tractor, as is also known as such from said DE-A-3112068.

It is remarked that such mobile devices for treating plants are known from FR-A-2420294, in which the operator controls swivelling of wheels to guide the device correctly along a number of rows of plants, which always requires the tiresome attention of an operator seated on the device.

From GB-A-2142447 such a device is known, having photosensors for operating a steering control of the device by photosensors scanning a boundary line, e.g. between an area where treatment (e.g. mowing) has taken place and an untreated area.

From FR-A-2606176 it is known to move a device between rows of plants with the steering means of the device operated by sensors, sensing the reflection of emitted waves by the plants.

The invention moreover relates to a particular embodiment of the given principle for such devices adapted to move in opposite directions during the treatment of plants.

The invention may be applied in devices for the treatment of plants of different kinds, but is first of all intended for use in devices for treating plants which do not form a continuous row with a substantially continuous upstanding side surface of the row, and which have parts suited for cooperation with a feeler, e.g. for contact therewith or by reflection of waves by such plant parts. This means first of all the use for treating trees and using a feeler sensing the trunks thereof below branches and foliage alternating with zones between the trunks, in which no plant parts are sensed. The invention may well be applied with a feeler making only very slight contact with parts of the plants but transmitting this contact e.g. into an electric signal in that the feeler operates a microswitch and needs very little force to be operated. The microswitch will then operate the wheel swivelling means in a manner easily devisable by the expert. The feeler may also be constituted by wave emitting and receiving means without mechanical contact, as given as known as such above. All this without deviating from the principle of the invention that the device is moved by the feeler sideways so that the feeler moves towards the plants from one side and then, in sensing a plant, swivels a wheel of the device in the opposite direction etc.

The invention will now be explained in greater detail with reference to the appended drawings, in which :

Fig. 1 is a side view of a device according to the invention in a preferred embodiment, for the treatment of fruit trees ;

Fig. 2 is an end view of said device ;

Fig. 3 is a schematic top view of a control device for and on the device according to Figs. 1 and 2;

The device shown has a rigid gantry structure 1, which is capable of reaching over a row of trees or shrubs. It has near the bottom end of one of the legs on arms 2 at front and back a wheel 3, 4 with only schematically indicated drive means 5, 6 and a drive unit 7 with drive shaft (not shown) to permit driving of both wheels 3 and 4.

Each wheel 3, 4 is supported in a fork 8 which with a vertical shaft engages in a bearing 9 on the arms 2 and by means 10 can be swivelled through at least somewhat more than 90°.

The drive unit 7 is located on the arms 2 on one side of the gantry. The arms 2 on the other side carry means for the treatment of the trees or shrubs, in this case intended as a spraying device, comprising a stock tank 11 for the spray liquid.

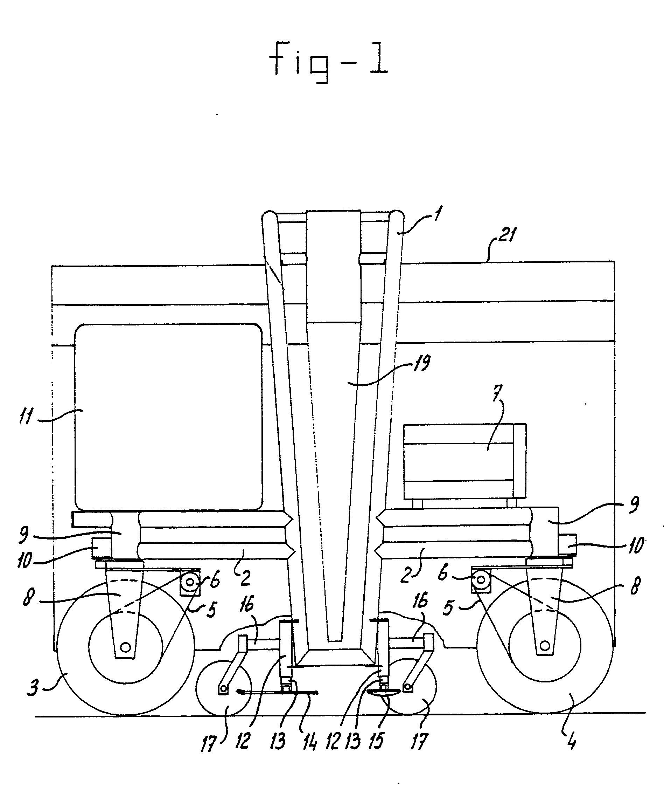

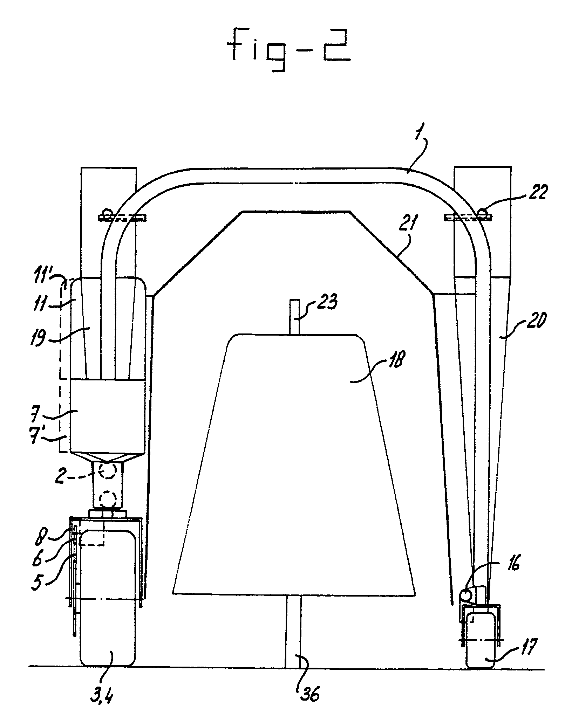

Between the wheels 3 and 4 at the bottom of said leg of the gantry 1 are two hydraulic cylinders 12 with downward movable pistons with piston rods 13. The latter have at the bottom either a common elongated pressure plate 14 of which only the left part is shown, a separate piston ram 15 or non-swivellable wheels positioned in the plane of Fig. 2 and perpendicular to the plane of Fig. 1.

Two piano wheels 17, which can be swivelled freely and are not driven, are located on the bottom of the opposite leg of the gantry 1 on arms 16. There may be two small wheels between the wheels 17, having hydraulic cylinders such as the cylinders 12 at the other side to push them down and to lift wheels 17.

The means for treatment of the trees or shrubs 18 can be very different, depending on the type of treatment. Here it is shown schematically for a spraying treatment how a tubular part 19, 20 can be disposed on each leg of the gantry 1, containing spray nozzles directed towards the trees or shrubs 18, and the gantry having disposed therein a tent-like casing 21 to prevent spreading of spray product, e.g. by the wind. There are in that case means (not shown) for conveying said spray product out of tank 11 to said parts 19 and 20 and pressurizing it, while said parts 19 and 20 can also blow air with the spray liquid to the trees or shrubs. The parts 19 and 20 can be connected to the gantry so that they are rotatable about vertical axes, as shown at 22 in Fig. 2, in order, e.g. when spraying backwards at an angle towards the trees or shrubs, to swivel these parts so that the spraying direction remains the same irrespective of the direction of travel of the device along the trees.

If the device has to treat low plants, for example bushes, potato plants or anything else, the gantry 1 can not only be lower, but also if desired much wider, in order to treat a number of rows or a fairly broad strip of plants simultaneously. The treatment means, for example spray nozzles, can then be fitted also or solely on the approximately horizontal crossbar(s) of the gantry, apart from or instead of on the upright legs thereof, which are connected to the wheels.

The casing 21 is shown cut away at centre bottom in Fig. 1, in order to show the swivelling wheels 17 and their supports 16 etc. well.

This device can operate as follows. The device travels with the gantry 1 reaching over the trees or shrubs 18 of a row, as shown in Fig. 2, for the treatment, for example spraying thereof, with the wheels 3 and 4 being driven. When the end of the row is reached the wheels 3 and 4 are swivelled through 90°, and the device is moved to a position in front of the next row. The correct positioning can take place through the device being stopped, for example automatically or manually when an indication is obtained that said next row has been reached, for example by focusing with the eye or with observation means on the device on the trunk of a first tree in said row, or on a post such as 23 which is positioned in front of said first tree. Such a post or trunk of the first tree of a row can also work in concert with the device in such a way that the latter automatically starts a treatment when it is moved into a row, while a signal goes out from a post 23 at the other end of the row to end this treatment. Such signals may also be used to start and stop movement of the device into and out of a row.

If the ground is very soft, or if it is damaged too much through the swivelling of the wheels or only for better directioning of the device, the cylinders 12 can first be operated to raise the wheels 3 and 4 through pressing plate 14 or rams 15 or wheels on cylinders 12 on the ground, so that said wheels can be swivelled without contact with the ground. This swivelling could therefore take place manually, with suitable locking mechanisms in order to fix positions relative to each other at an angle of 90°.

The piano wheels 17 swivel directly also when the device begins to move after swivelling of the wheels 3 and 4. Since in the example shown the leg of gantry 1 with the wheels 3 and 4, due to those (heavier) wheels, the drive mechanism and the treatment means such as stock tank 11, presses much more heavily on the ground than the leg with the swivelling wheels 17, the latter require no pressure release during swivelling, but, as stated, may also be lifted by pushing down transverse wheels between them. If desired, the pressure on the swivelling wheels 17 can be further reduced by, for example, positioning the drive unit 7 and the stock tank 11 or similar parts with their centre of gravity somewhat further to the left in Fig. 2 than centrally above the longitudinal central plane of the wheels 3 and 4, as shown schematically by dashed line 11', 7' for stock tank 11 and drive unit 7 respectively on the left in Fig. 2.

When the device has travelled thus to the next row, the wheels 3 and 4 are swivelled again through 90°, so that the device can now travel over the trees or shrubs of the next row. For this there are two possibilities : These wheels are swung back to the position in the previous row, or are swung further to positions at an angle of 180° relative to those positions in the previous row. In the first case the wheels 3 and 4 must be drivable in opposite directions, while in the second case this is not necessary.

At the beginning of the movement through said next row the treatment means such as the parts 19 and 20 can be swivelled as stated in order, for example during spraying, to take up the same angular position relative to the direction of travel and to the trees or shrubs.

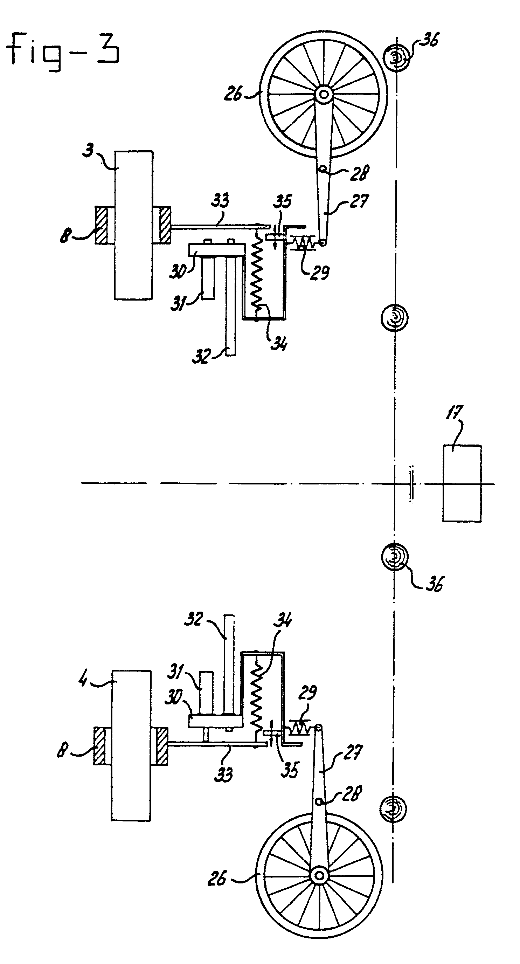

The device can be moved unmanned through the rows. The means according to the invention for ensuring that the device always remains in the correct transverse position relative to the row will now be described with reference to Fig. 3.

A feeler 26, for example in the form of a free-rotating cycle wheel with vertical axis, is located both on the front and on the rear side of the device, fixed on a lever 27 hingedly supported at 28 in the device. A spring 29 pulls said feelers to the right in Fig. 3, to a position which is e.g. determined by a stop (not shown). The fixed parts of the device have a platform 30 on which two cylinders 31 and 32 e.g. hydraulic cylinders or other linear motors, are disposed. A swivelling arm 33 is disposed on the bearing fork 8 of each wheel 3, 4, said arm being pulled in one direction by a spring 34 and is limited in movement in that direction by a fixed, but adjustable stop 35.

A row of trunks 36 of the trees to be treated is shown in the figure.

There are operating means, yet to be described, to operate the cylinders 31 and 32, so that on energizing them, e.g. with liquid therein a piston which makes a piston rod extend to a greater or lesser extent therefrom, can be displaced.

Seen in Figs. 1 and 2, the swivel arm 33 with the other parts 26 to 35 of Fig. 3 can be positioned below the casing 21 and below the branches and foliage of the trees to be treated.

This device works as follows : When the device travels in a particular direction, the piston rod of cylinder 31 at the then hindmost wheel 3 or 4 is extended to a specific, adjustable degree until it is against the swivel arm 33, in which case spring 34 retains said arm in contact therewith, as a result of which the wheel in question (wheel 4 in Fig. 3) is held as truly as possible in the position parallel to the row of trees. Cylinder 32 for wheel 4 remains non-energized, and the cycle wheel 26 of wheel 4 is shut off from the energizing system of the cylinders 31 and 32, so that it does not have any influence on them, not even if it touches a trunk 36.

For the then leading wheel (3 in Fig. 3) the piston rod of cylinder 31 is retracted. Spring 34 then pulls swivel arm 33 against stop 35, in which case wheel 3 is directed slightly slanting towards the row of trunks 36, e.g. at an angle of 2°-8°. This angle is variable by adjustment of stop 35 and is chosen so, depending on the distance between the trunks 36, that the device will never move sideways more than a desired maximum amount, e.g. of 50 mm. When looking at the device, it will make the impression of moving almost accurately straight-on in one line over the trees. During further movement the device then travels forward at such a slight angle towards said row of trunks 36 (to the right in Fig. 3). Once the leading wheel 26 now touches a trunk 36 and on further movement forward it is pushed away to the left in Fig. 3 by said trunk. Thereby, the lever 27 of this wheel 26 operates a hydraulic sliding valve (not shown) which energizes said cylinder 32, so that its piston rod is extended until it is pressing against swivel arm 33, as a result of which wheel 3 is swivelled into a direction in which the device moves away a little from the row of trunks 36 on further movement (to the left in Fig. 3). When this wheel 26 thereupon leaves the trunk 36, spring 29 will move it back to the position as shown, whereby said hydraulic valve is moved back to its initial position as described, in which the piston rod of cylinder 32 is retracted, so that swivel arm 33 is again drawn against stop 35 in order to make the device move at a slight angle again towards the row of trunks. A throtting throughflow control valve in the hydraulic system to energize cylinder 32 can ensure that the wheel 3 transfers smoothly and gradually from one position to the other.

When switching from one direction of movement of the device to the opposite direction, in which wheel 4 becomes the front wheel, piston rod of cylinder 31 of wheel 3 is extended to the position shown in Fig. 3 for wheel 4 and piston rod of cylinder 31 for wheel 4 is retracted, as shown in Fig. 3 for wheel 3.

Treating plants as indicated in this specification may also mean treating the soil near their roots, e.g. for cultivating, needing or moving weeds arount or below them.

## Claims

1. Mobile device for treating plants in rows such as crops and fruit trees in the field, comprising a carrier device (1) for the treatment means, with wheels (3, 4, 17) at the bottom so that said mobile device can run along a row of plants (36), and swivelling means (8, 30-35) for at least one wheel (3, 4), operated by a feeler (26) which detects the position of a row of plants (36), such as the trunks of trees or shrubs, and which can swivel said wheel (3, 4) through a slight angle in such a way that said mobile device maintains the correct distance from said row of plants (36) during travelling, characterized in that the feeler (26) comprises a setting facility (33, 34, 35) for said wheel (3, 4) holding it, in a position in which the feeler (26) does not detect a plant (36), directed in such a way that the mobile device travels at a small angle with respect to the row of plants (36) and moves the feeler (26) towards the row of plants.

2. Device according to claim 1, in which two feeler elements (26) are disposed one behind the other, each working for only one direction of travel of the device in order to swivel a wheel (3, 4).

3. Device according to claim 2, in which each feeler element (26) acts upon a different wheel (3, 4) of two swivelling wheels (3, 4) lying at a longitudinal distance from each other as seen in the direction of movement of the device.

4. Device according to claim 3, in which a retractable stop (31) is disposed in a switching system (29-35) being operable in such a way that said stop (31) holds the wheel (3, 4), which in a particular direction of travel is the rear wheel, in the normal travelling position, which stop (31) for the then leading wheel is retracted in order to permit swivelling of that wheel (3, 4) from said travelling position in both directions.

5. Device according to any of the preceding claims, in which the said swivelling means (8, 30-35) of said wheel (3, 4) has a swivel arm (33) swivelling with said wheel, cooperating with a stop (35), and in which a spring (34) tries to pull the swivel arm (33) of said wheel (3, 4) against this stop (35) which determines the position of the wheel (3, 4) slightly at an angle towards said plants, a linear correction motor (32) acting on said swivel arm (33) in order to move it away from said stop (35) under the influence of the feeler element (26) for said wheel (3, 4).

6. Device according to claims 4 and 5, in which both stops (31, 35) and said linear correction motor (32) act on the same swivelling arm (33) of said wheel (3, 4).

7. Device according to claim 6, in which the stop (31) for keeping the rear swivelling wheel (3, 4) in the normal direction of travel and said linear correction motor (32) are mounted side by side and each have a piston rod or the like, extendable and retractable so as to contact the swivelling arm (33) or leave it free to move respectively, so that the end of at most one of said piston rods contacts the swivelling arm (33) at a time.

8. Device according to any of the preceding claims, having a carrier device (1) being of gantry construction extending over one or more rows of plants (36) and having two swivelling wheels (3, 4) on one leg of the gantry, which can be swivelled by such swivelling means (8, 30-35), while the swivelling wheels (17) on the other leg of the gantry are in the form of piano wheels.

9. Device according to claim 8, in which said two wheels (3, 4) swivellable by said swivelling means (8, 30-35) are driven wheels (driven by 5-7) for the propulsion of the device, and the swivelling wheels (17) on the other leg of the gantry (1) are not driven.

10. Device according to claim 8 or 9, in which one leg of the gantry (1) is fitted with a drive unit (7) for driving the wheels (3, 4) of said leg, and the auxiliary means (such as 11) for treating the plants (36), insofar as not necessarily fitted on both legs or directly above the plants, are fitted largely on that same leg, so that the gantry (1) presses on the ground with much greater weight with one leg than with the other leg.

11. Device according to any of claims 8 to 10, in which the gantry (1) has supporting means (14) at least on one side, such as one or more horizontal plates, which can be pressed down (by 12, 13) on the ground to permit raising of the wheels (3, 4) of the gantry (1) on that side, in order to be able to swivel said wheels (3, 4) unimpeded.

12. Swivelling device (8, 26-35) for use in swivelling a wheel (3, 4) of a mobile device according to any of the preceding claims, comprising swiveling means (8, 30-35) and a feeler (26), which operates the swivelling means and detects the position of a row of plants (36), such as the trunks of trees or shrubs, and which can swivel said wheel (3, 4) through a slight angle in such a way that said mobile device maintains the correct distance from said row of plants (36) during travelling, characterised in that the feeler (26) comprises a setting facility (33-35) for said wheel (3, 4) holding it, in a position in which the feeler (26) does not detect a plant, directed in such a way that the mobile device travels at a small angle with respect to the row of plants (36) and moves the feeler (26) towards the row of plants.

**Revendications**

1. Dispositif mobile pour le traitement de plantes en rangées telles que des produits de récolte et des arbres fruitiers sur place, comprenant un dispositif support (1) pour les moyens de traitement, avec des roues (3, 4, 17) à la partie inférieure afin que ledit dispositif mobile puisse circuler le long d'une rangée de plantes (36), et des moyens de pivotement (8, 30-35) pour au moins une roue (3, 4) actionnés par un palpeur (26) qui détecte la position d'une rangée de plantes (36) telles que les troncs des arbres ou arbustes, et qui puisse faire pivoter ladite roue (3, 4) d'un certain angle faible de telle sorte que ledit dispositif mobile maintienne la distance correcte par rapport à ladite rangée de plantes (36) au cours de son déplacement, caractérisé en ce que le palpeur (26) comporte un dispositif de stabilisation (33, 34, 35) de ladite roue (3, 4) destiné à la maintenir, dans une position dans laquelle le palpeur (26) ne détecte pas de plantes (36), orientée de façon que le dispositif mobile se déplace sous un petit angle par rapport à la rangée des plantes (36) et déplace le palpeur (26) vers la rangée des plantes.

2. Dispositif selon la revendication 1, dans lequel deux éléments palpeurs (26) sont placés l'un derrière l'autre, chacun travaillant dans une seule direction de déplacement du dispositif afin de faire pivoter une roue (3, 4).

3. Dispositif selon la revendication 2, dans lequel chaque élément palpeur (26) agit sur une roue différente (3, 4) parmi les deux roues pivotantes (3, 4) installées à une certaine distance longitudinale l'une de l'autre considérée dans la direction du mouvement du dispositif.

4. Dispositif selon la revendication 3, dans lequel une butée rétractable (31) est placée dans un système de commutation (29-35) en pouvant être manoeuvrée de manière que ladite butée (31) maintienne la roue (3, 4), laquelle dans une direction particulière de déplacement est la roue arrière, dans la position normale de déplacement, laquelle butée (31), pour la roue qui se trouve alors en avant, est reculée afin de permettre de pivoter ladite roue (3, 4) par rapport à ladite position de déplacement dans les deux directions.

5. Dispositif selon l'une quelconque des revendications précédentes, dans lequel ledit moyen de pivotement (8, 30-35) de ladite roue (3, 4) comporte un bras pivotant (33) qui pivote avec ladite roue, en coopérant avec une butée (35) et dans lequel un ressort (34) tente de tirer le bras pivotant (33) de ladite roue (3, 4) contre cette butée (35) laquelle détermine la position de la roue (3, 4) sous un certain angle faible en direction desdites plantes, un moteur de correction linéaire (32) agissant sur ledit bras pivotant (33) afin de l'éloigner de ladite butée (35) sous l'influence de l'élément palpeur (26) correspondant à ladite roue (3, 4).

6. Dispositif selon les revendications 4 et 5, dans lequel les deux butées (31, 35) et ledit moteur linéaire de correction (32) agissent sur le même bras pivotant (33) de ladite roue (3, 4).

7. Dispositif selon la revendication 6, dans lequel la butée (31) destinée à maintenir la roue arrière (3, 4) pivotante dans la direction normale de déplacement et ledit moteur linéaire de correction (32) sont montés côte à côte et comportent chacun une tige de piston ou analogue, pouvant sortir et rentrer afin de venir en contact avec le bras pivotant (33) ou de le laisser libre de se déplacer respectivement, afin que l'extrémité d'au moins une desdites tiges de piston vienne en contact avec le bras pivotant (33) à un instant donné.

8. Dispositif selon l'une quelconque des revendications précédentes, comportant un dispositif support (1) correspondant à la construction d'un portique qui s'étend au-dessus d'une ou plusieurs rangées de plantes (36) et qui comporte deux roues pivotantes (3, 4) sur un jambage du portique, lesquelles peuvent être pivotées par ledit moyen de pivotement (8, 30-35), tandis que les roues pivotantes (17) de l'autre jambage du portique sont des roues pivotantes libres.

9. Dispositif selon la revendication 8, dans lequel lesdites deux roues (3, 4) pivotantes sous l'effet dudit moyen de pivotement (8, 30-35) sont des roues motrices (entraînées par 5-7) pour propulser le dispositif, et les roues pivotantes (17) de l'autre jambage du portique (1) sont des roues qui ne sont pas entraînées.

10. Dispositif selon la revendication 8 ou 9, dans lequel un jambage du portique (1) est équipé d'une unité d'entraînement (7) pour entraîner les roues (3, 4) dudit jambage, et le moyen auxiliaire (tel que 11) pour traiter les plantes (36), considérées jusqu'à maintenant comme non nécessairement montées sur les deux jambages ni directement au-dessus des plantes, sont en majeure partie montées sur le même jambage, afin que le portique (1) exerce sur le sol un poids beaucoup plus élevé avec un premier jambage qu'avec l'autre.

11. Dispositif selon l'une quelconque des revendications 8 à 10, dans lequel le portique (1) comprend des moyens supports (14) au moins d'un côté tels qu'une ou plusieurs plaques horizontales qui peuvent être appuyées vers le bas (par 12, 13) sur le sol pour permettre de soulever les roues (3, 4) du portique (1) de ce côté afin de pouvoir pivoter lesdites roues (3, 4) sans contrainte.

12. Dispositif pivotant (8, 26-35) à utiliser pour faire pivoter une roue (3, 4) d'un dispositif mobile selon l'une quelconque des revendications précédentes, comprenant un moyen de pivotement (8, 30-35) et un palpeur (26) qui actionne le moyen de pivotement et détecte la position d'une rangée de plantes (36) telles que les troncs d'arbres ou d'arbustes, et qui peut faire pivoter ladite roue (3, 4) d'un angle faible de façon que ledit dispositif mobile se maintienne à distance correcte de ladite rangée de plantes (36) pendant son déplacement, caractérisé en ce que ledit palpeur (36) comporte un dispositif de stabilisation (31-35) de ladite roue (3, 4) qui la maintient, dans une position dans laquelle le palpeur (26) ne détecte pas de plante, avec une orientation telle que le dispositif mobile se déplace sous un angle faible par rapport à la rangée de plantes (36) et déplace le palpeur (26) vers la rangée de plantes.

**Patentansprüche**

1. Bewegliche Vorrichtung zum Behandeln von in Reihen angeordneten Pflanzen, wie Erntegut und Obstbäume auf dem Feld, welche eine Trageinrichtung (1) für die Behandlungseinrichtung mit Rädern (3, 4, 17) am Boden derart aufweist, daß die bewegliche Vorrichtung längs einer Pflanzenreihe (36) sich bewegen kann, und eine Schwenkeinrichtung (8, 30-35) für wenigstens ein Rad (3, 4) aufweist, welches durch einen Fühler (26) betreibbar ist, der die Position einer Pflanzenreihe (36), wie der Baumstämme oder Büsche, feststellt, und welcher das Rad (3, 4) um einen kleinen Winkel derart verschwenken kann, daß die bewegliche Vorrichtung den richtigen Abstand von der Pflanzenreihe (36) während der Fahrt einhält, dadurch **gekennzeichnet**, daß der Fühler (26) eine Einstelleinrichtung (33, 34, 35) für das Rad (3, 4) aufweist, welche dasselbe, in einer Position, in der der Fühler (26) eine Pflanze (36) nicht feststellt, in einer Richtung gelenkt hält, in der die bewegliche Vorrichtung sich um einen kleinen Winkel bezüglich der Pflanzenreihe (36) bewegt und der Fühler (26) in Richtung auf die Pflanzenreihe bewegt.

2. Vorrichtung nach Anspruch 1, bei der zwei Fühlelemente (26) hintereinander angeordnet sind, wobei jedes für nur eine Fahrtrichtung der Vorrichtung arbeitet, um ein Rad (3, 4) zu verschwenken.

3. Vorrichtung nach Anspruch 2, bei der jedes Fühlelement (26) auf ein unterschiedliches Rad (3, 4) der beiden schwenkbaren Räder (3, 4) wirkt, die in Längsrichtung, bezogen auf die Bewegungsrichtung der Vorrichtung ; in einem Abstand liegen.

4. Vorrichtung nach Anspruch 3, bei der ein einziehbarer Anschlag (31) in einem Schaltsystem (29-35) derart betreibbar angeordnet ist, daß der Anschlag (31) das Rad (3, 4) welches in einer bestimmten Bewegungsrichtung das Hinterrad ist, in der normalen Fahrstellung hält, wobei der Anschlag (31) für das dann vorauslaufende Rad eingefahren ist, um ein Verschwenken dieses Rades (3, 4) von der Fahrstellung in beiden Richtungen zu ermöglichen.

5. Vorrichtung nach einem der vorangehenden Ansprüche, bei der die Schwenkeinrichtung (8, 30-35) des Rads (3, 4) einen Schwenkarm (33) hat, der mit dem Rad schwenkbar ist und mit einem Anschlag (35) zusammenarbeitet, wobei eine Feder (34) versucht, den Schwenkarm (33) des Rades (3, 4) gegen den Anschlag (35) zu ziehen, welcher die Position des Rads (3, 4) in einen Winkel geringfügig zu den Pflanzen bestimmt, und bei der ein linearer Korrekturmotor (32) den Schwenkarm (33) beaufschlagt, um denselben von dem Anschlag (35) unter der Wirkung des Fühlerelements (26) für das Rad (3, 4) wegzubewegen.

6. Vorrichtung nach Anspruch 4 und 5, bei der beide Anschläge (31, 35) und der lineare Korrekturmotor (32) ein und denselben Schwenkarm (33) des Rads (3, 4) beaufschlagen.

7. Vorrichtung nach Anspruch 6, bei der der Anschlag (31), welcher das hintere, schwenkbare Rad (3, 4) in der Grundfahrtrichtung hält, und der lineare Korrekturmotor (32) nebeneinanderliegend angebracht sind, und bei der diese jeweils eine Kolbenstange oder dergleichen haben, welche derart ein- und ausfahrbar ist, daß sie den Schwenkarm (33) berührt oder jeweils diesen zur Bewegung freilässt daß das Ende höchstens einer der Kolbenstangen den Schwenkarm (33) zu einem gegebenen Zeitpunkt berührt.

8. Vorrichtung nach einem der vorangehenden Ansprüche, die eine Trageinrichtung (1) mit einer Portalkonstruktion hat, welche sich über eine oder mehrere Pflanzenreihen (36) erstreckt und die zwei Schwenkräder (3, 4) auf einem Bein der Portalkonstruktion hat, das durch die Schwenkeinrichtung (8, 30-35) verschwenkt werden kann, während die schwenkbaren Räder (17) auf dem anderen Bein der Portalkonstruktion in Form von Klavierrädern ausgebildet sind.

9. Vorrichtung nach Anspruch 8, bei der die beiden Räder (3, 4), die mittels der Schwenkeinrichtung (8, 30, 35) schwenkbar sind, getriebene Räder (getrieben durch 5-7) zum Antreiben der Vorrichtung sind, und bei der die schwenkbaren Räder (17) am anderen Bein der Portalkonstruktion (1) nicht angetrieben sind.

10. Vorrichtung nach Anspruch 8 oder 9, bei der ein Bein der Portalkonstruktion (1) mit einer Antriebseinheit (7) zum Antreiben der Räder (3, 4) des Beins versehen ist, und bei der die Hilfseinrichtungen (wie 11) für die Behandlung der Pflanzen (36), wenn sie nicht notwendigerweise an beiden Beinen oder direkt oberhalb der Pflanzen passend angeordnet werden müssen, größtenteils an dem gleichen Bein angebracht sind, so daß die Portalkonstruktion (1) auf den Untergrund mit dem einen Bein mit viel grösserem Gewicht als mit dem anderen Bein drückt.

11. Vorrichtung nach einem der Ansprüche 8 bis 10, bei der die Portalkonstruktion (1) eine Stützeinrichtung (14) wenigstens auf einer Seite, wie eine oder mehrere horizontale Platten, hat, welche nach unten (durch 12, 13) auf den Untergrund gedrückt werden können, um die Räder (3, 4) der Portalkonstruktion (1) auf dieser Seite zu heben und zu ermöglichen, daß die Räder (3, 4) unbehindert verschwenkt werden können.

12. Schwenkvorrichtung (8, 26-35) zur Verwendung beim Verschwenken eines Rads (3, 4) einer beweglichen Vorrichtung gemäß einem der vorangehenden Ansprüche, welche eine Schwenkeinrichtung (8, 30-35) und einen Fühler (26) aufweist, welcher die Schwenkeinrichtung beaufschlagt und die Position einer Pflanzenreihe (36), wie Baumstämme oder Büsche, feststellt, und der das Rad (3, 4) um einen kleinen Winkel derart schwenken kann, daß die bewegliche Vorrichtung den korrekten Abstand von den Pflanzenreihen (36) während der Fahrt beibehält, dadurch **gekennzeichnet**, daß der Fühler (26) eine Einstelleinrichtung (33-35) für das durch denselben gehaltene Rad (3, 4) derart hat, daß dieses, in einer Position in der der Fühler (26) eine Pflanze nicht detektiert, in einer Richtung gelenkt hält, in der die bewegliche Vorrichtung sich um einen kleinen Winkel bezüglich der Pflanzenreihe (36) bewegt und der Fühler (26) in Richtung auf die Pflanzenreihe bewegt.

fig-1

# fig-2

fig-3